# EUROPEAN PATENT APPLICATION

(11) **EP 4 333 129 A1**
(43) Date of publication of application: **06.03.2024**
(21) Application number: 22927667.0
(22) Date of filing: 23.02.2022
(51) Int. Cl.: H01M 4/66, H01M 10/0525, H01M 10/058

(54) **COMPOSITE CURRENT COLLECTOR, ELECTRODE ASSEMBLY, METHODS FOR MANUFACTURING COMPOSITE CURRENT COLLECTOR AND ELECTRODE ASSEMBLY, AND SECONDARY BATTERY**

(71) Applicant: Contemporary Amperex Technology Co., Limited, Ningde, Fujian 352100 (CN)
(72) Inventor: WU, Zhiyang, Ningde, Fujian 352100 (CN); LIU, Mingjian, Ningde, Fujian 352100 (CN); LI, Keqiang, Ningde, Fujian 352100 (CN); XIE, Bin, Ningde, Fujian 352100 (CN)
(74) Representative: Gong, Jinping
(86) International application number: PCT/CN2022/077399
(87) International publication number: WO 2023/159372

(57) **Abstract**

The present application provides a composite current collector, including: an organic support layer having an air permeability greater than or equal to 50 s/100 mL; and an electrically conductive layer arranged on one surface of the organic support layer. In this way, the organic support layer can also be used as a separator, thereby increasing the volumetric energy density of a secondary battery using the composite current collector.

## Description

### Technical Field

The present application relates to the field of electrochemistry, and in particular to, a composite current collector and a manufacturing method therefor, a secondary battery having the same, and a power consuming device.

### Background Art

In recent years, with the increasing application range of lithium-ion batteries, lithium-ion batteries are widely used in energy storage power systems such as hydroelectric, thermal, wind and solar power stations, as well as electric tools, electric bicycles, electric motorcycles, electric vehicles, military equipment, aerospace and other fields. Due to the great development of lithium-ion batteries, higher requirements have also been placed on the lithium-ion secondary batteries in terms of energy density, cycle performance, safety performance, etc.

An electrode plate of the prior art includes: a metal current collector and active material layers formed on two surfaces of the current collector.Moreover, electrode plates of different polarities are separated from each other by separators. Such an electrode plate structure requires winding up or stacking two layers of separators during manufacturing, and its manufacturing process is complicated. In addition, a secondary battery using this electrode plate structure has a long ion channel, which affects charge and discharge characteristics.

### Summary of the Invention

The present application has been made in view of the above problems, and an objective thereof is to provide a composite current collector and a manufacturing method therefor, a secondary battery having the same, and a power consuming device. With the composite current collector, a separator provided between electrode plates can be omitted, the manufacturing process can be simplified, the ion channel can be shortened, and the charge and discharge characteristics can be improved. In addition, since a space for providing the separator is saved, more active material can be coated per unit volume, thereby increasing the energy density.

In order to achieve the above objective, a first aspect of the present application provides a composite current collector, including: an organic support layer having an air permeability greater than or equal to 50 s/100mL; and an electrically conductive layer arranged on one surface of the organic support layer.

An organic layer having an air permeability greater than or equal to 50 s/100mL is used as a support layer of the composite current collector, and the support layer can be used as a separator, so that a separator provided between electrode plates can be omitted, the manufacturing process can be simplified, the ion channel can be shortened, and the charge and discharge characteristics can be improved. In addition, since a space for providing the separator is saved, more active material can be coated per unit volume, thereby increasing the energy density.

In some embodiments, the organic support layer has an air permeability of 50 s/100 mL to 2000 s/100 mL, and optionally, 100 s/100 mL to 500 s/100 mL. The air permeability of the organic support layer is controlled within the above-mentioned range, so that the ion permeability can be ensured, and an electrolyte solution can have a good infiltration performance, allowing lithium ions of the electrolyte solution to pass through smoothly. If the air permeability is too high, pores of the separator are equivalent to closed pores, and lithium ions of the electrolyte solution cannot pass through the separator, so that high ion permeability cannot be achieved. If the air permeability is too low, pores of the separator are equivalent to through pores, and large-particle ions of other materials may also pass through, so that the separator is ineffective. Thus, by setting the air permeability reasonably, the charge and discharge characteristics of the secondary battery can be further improved.

In some embodiments, the electrically conductive layer has pores, and the electrically conductive layer has a porosity of 10% to 95%, and optionally, 10% to 50%. Since the porosity of the electrically conductive layer is controlled within the above-mentioned range, the required ion permeability can be met, further improving the charge and discharge characteristics of the secondary battery. By keeping the porosity in an appropriate range, insufficient ion permeability can be avoided, and a circumstance where ions are immersed into the electrically conductive layer while surplus ions fail to penetrate due to the lack of space in the organic support layer can be avoided. In addition, an upper limit of a fiber pore permeability of the organic support layer is positively correlated with an upper limit of the porosity of the electrically conductive layer, which can ensure ion permeability.

In some embodiments, the organic support layer is a polyethylene film, a polypropylene film, a polyvinylidene chloride film or a multi-layer composite film thereof. The organic support layer made of the above-mentioned material can reliably form a support layer with a high ion permeability.

In some embodiments, the electrically conductive layer has a thickness of 200 nm to 3000 nm, and optionally, 500 nm to 1500 nm. Since the thickness of the electrically conductive layer is within the above-mentioned range, it is conductive to improving the volumetric energy density of the secondary battery, and under an abnormal condition such as nail penetration of the secondary battery, burr generated by the electrically conductive layer is reduced greatly, short-circuit resistance of the secondary battery is increased, and short-circuit current and short-circuit heat generation are reduced, thereby improving the safety performance of the secondary battery; moreover, it is conducive to making the composite current collector have a good electrical conductivity and current collection performance, and less prone to breakage during processing and use of the composite current collector, so that the composite current collector has a good mechanical stability and a long service life.

In some embodiments, the electrically conductive layer includes a pore-making transition layer, a thickening layer, a functional layer, and a protective layer that are stacked in sequence from the organic support layer. In this way, the ion channel can be formed on the electrically conductive layer well and the thickness of the electrically conductive layer can be adjusted easily. In addition, the protective layer can prevent the electrically conductive layer from chemical corrosion, mechanical damage or other damages, to ensure that the composite current collector has a high working stability and a long service life. In addition, the protective layer can also enhance the mechanical strength of the composite current collector.

In some embodiments, the pore-making transition layer, the thickening layer, and the functional layer each are made of one or more of aluminum, an aluminum alloy, copper, a copper alloy, nickel, a nickel alloy, titanium, a titanium alloy, iron, an iron alloy, silver and a silver alloy, and the protective layer includes one or more of metal, metal oxide, and conductive carbon, and preferably includes one or more of nickel, chromium, a nickel-based alloy, a copper-based alloy, aluminum oxide, cobalt oxide, chromium oxide, nickel oxide, graphite, superconducting carbon, acetylene black, carbon black, Ketjen black, a carbon dot, a carbon nanotube, graphene, and a carbon nanofiber. In this way, the protective layer can play a protective role against chemical corrosion and mechanical damage to the electrically conductive layer, and can also improve an interface between the composite current collector and the active material layer, increase a bonding force between the composite current collector and the positive electrode active material layer, and improve the performance of the secondary battery.

In some embodiments, the pore-making transition layer has a thickness of 2 nm to 100 nm, and optionally, 10 nm to 50 nm; the thickening layer has a thickness of 5 nm to 300 nm, and optionally, 20 nm to 100 nm; and the functional layer has a thickness of 500 nm to 5000 nm, and optionally, 500 nm to 2000 nm. In this way, the ion permeability, the electrical conductivity and the mechanical stability of the composite current collector can be balanced.

A primer layer is further provided between the active material layer and the electrically conductive layer, the primer layer including a binder and a conductive agent. The primer layer can improve an interface of the composite current collector and overcome shortcomings such as poor electrical conductivity and current flow capacity of the composite current collector and the electrically conductive layer of the composite current collector being susceptible to damage, and can improve the electron transport efficiency, and reduce the resistance between the current collector and the electrode active material layer by effectively mending the surface of the current collector and constructing a conductive network between the current collector, the conductive primer layer and the active material, thereby effectively reducing the internal direct-current internal resistance in the secondary battery, improving the power performance of the secondary battery, and ensuring that a cell is less prone to large polarization, lithium precipitation and other phenomena during long-term cycling, that is, the long-term reliability of the secondary battery is effectively improved.

A second aspect of the present application provides an electrode assembly, including a first electrode plate and a second electrode plate, wherein one of the first electrode plate and the second electrode plate includes the composite current collector in the first aspect, an active material layer is provided on the electrically conductive layer of the composite current collector, and the organic support layer of the one of the first electrode plate and the second electrode plate is arranged in close contact with an active material layer of the other one of the first electrode plate and the second electrode plate. In this way, the electrode plate including the composite current collector in the first aspect of the present application may be used with a common electrode plate with the opposite polarity, thereby omitting the use of a separator layer.

A third aspect of the present application provides an electrode assembly, including a first electrode plate and a second electrode plate, wherein the first electrode plate and the second electrode plate each include the composite current collector in the first aspect of the present application, an active material layer is provided on the electrically conductive layer of the composite current collector, the organic support layer of the first electrode plate is arranged in close contact with the active material layer of the second electrode plate, and the organic support layer of the second electrode plate is arranged in close contact with the active material layer of the first electrode plate. In this way, with the electrode plates that include the composite current collector in the first aspect of the present application and have different polarities, the second battery can be formed without a separator.

A fourth aspect of the present application provides a method for manufacturing the composite current collector according to the first aspect of the present application, the method including the following steps (1) to (3):
step (1): forming an organic support layer having an air permeability greater than or equal to 50 s/100 mL;
step (2): forming a pore-making transition layer on one surface of the organic support layer by vapor deposition and by using a photomask with pores; and
step (3): forming an electrically conductive metal layer on the pore-making transition layer by electroplating.

By the foregoing method, pores can be formed in the electrically conductive metal layer by using a photomask, so that high ion permeability can be achieved, further improving the charge and discharge characteristics of the secondary battery. In addition, the pore-making transition layer serves as a substrate for an electroplated layer, so that an electroplated layer with pores can be formed easily, and the thickness of the electrically conductive metal layer can be adjusted easily by electroplating.

In some embodiments, the method further includes:
step (4): forming a protective layer on the electrically conductive metal layer.

In this way, the protective layer can prevent the electrically conductive layer from chemical corrosion, mechanical damage or other damages, to ensure that the composite current collector has a high working stability and a long service life. In addition, the protective layer can also enhance the mechanical strength of the composite current collector.

In some embodiments, in step (2), a pore size and a porosity of the pore-making transition layer are adjusted with a pore size and a pore density of the photomask. In this way, ion permeability and the electrical conductivity of the composite current collector can be balanced.

In some embodiments, in step (2), an electrically conductive material is evaporated in a vacuum plating chamber at a temperature of 1300°C to 2000°C, and is then cooled and deposited on the organic support layer to form the pore-making transition layer. In this way, a bonding force between the electrically conductive metal layer and the organic support layer can be increased, and the organic support layer is effective in supporting the electrically conductive metal layer.

In some embodiments, in step (4), the protective layer is formed on the electrically conductive metal layer by at least one of a vapor deposition method, an in-situ formation method or a coating method. In this way, a relatively high bonding force is provided between the electrically conductive layer and the protective layer, so that the protective layer better protects the composite current collector, and a higher operating performance of the composite current collector is ensured.

A fifth aspect of the present application provides a method for manufacturing a battery assembly, the method including:
preparing a first electrode plate, the first electrode plate including a first composite current collector which is a composite current collector in the first aspect of the present application, an active material layer being provided on the electrically conductive layer of the composite current collector;
preparing a second electrode plate, the second electrode plate including a second current collector and active material layers provided on two surfaces of the second current collector;
preparing a separator; and
stacking the first electrode plate, the second electrode plate and the separator in sequence in such a way that the organic support layer of the first composite current collector of the first electrode plate is in contact with one of the active material layers of the second electrode plate and the other active material layer of the second electrode plate is in contact with the separator, to obtain a stacked structure, and winding up the stacked structure.

In this way, the use of a separator layer for manufacturing the electrode assembly can be omitted.

A sixth aspect of the present application provides a method for manufacturing a battery assembly, the method including:
preparing a first electrode plate and a second electrode plate, the first electrode plate including a first composite current collector and the second electrode plate including a second composite current collector, the first composite current collector and the second composite current collector each being a composite current collector in the first aspect of the present application, an active material layer being provided on the electrically conductive layer of the composite current collector; and
winding up the first electrode plate and the second electrode plate in such a way that the organic support layer of the first composite current collector of the first electrode plate is in contact with the active material layer of the second electrode plate and the organic support layer of the second composite current collector of the second electrode plate is in contact with the active material layer of the first electrode plate.

In this way, the electrode assembly can be manufactured without a separator.

A seventh aspect of the present application provides a secondary battery including at least one of an electrode assembly according to the second and third aspects of the present application and an electrode assembly manufactured by the manufacturing method according to the fifth and sixth aspects of the present application.

An eighth aspect of the present application provides a power consuming device including a secondary battery according to the seventh aspect of the present application.

According to the present application, the cycling performance, the rate performance and the low internal resistance of the secondary battery can be balanced.

### Brief Description of the Drawings

Fig. 1 is a schematic cross-sectional view of a composite current collector according to an embodiment of the present application.
Fig. 2 is a schematic cross-sectional view of a composite current collector according to an embodiment of the present application.
Fig. 3 is a schematic cross-sectional view of a composite current collector according to an embodiment of the present application.
Fig. 4 is a cross-sectional view of an electrode assembly according to an embodiment of the present application.
Fig. 5 is a top view of the electrode assembly shown in Fig. 4 after being wound up.
Fig. 6 is a cross-sectional view of an electrode assembly according to an embodiment of the present application.
Fig. 7 is a top view of the electrode assembly shown in Fig. 6 after being wound up.
Fig. 8 is a schematic view of a secondary battery according to an embodiment of the present application.
Fig. 9 is an exploded view of a secondary battery according to an embodiment of the present application as shown in Fig. 8.
Fig. 10 is a schematic view of a battery module according to an embodiment of the present application.
Fig. 11 is a schematic view of a battery pack according to an embodiment of the present application.
Fig. 12 is an exploded view of a battery pack according to an embodiment of the present application as shown in Fig. 11.
Fig. 13 is a schematic view of a power consuming device using a secondary battery as a power source according to an embodiment of the present application.

### List of reference signs:

1 battery pack; 2 upper case body; 3 lower case body; 4 battery module; 5 secondary battery; 51 housing; 52, 52A electrode assembly; 53 top cover assembly; 610, 610A composite current collector; 611, 611A organic support layer; 612, 612A electrically conductive layer; 62, 62A active material layer; 6121 pore-making transition layer; 6122 thickening layer; 6123 functional layer; 6124 protective layer; 63, 63A electrical connection member; 64 primer layer; 6, 6A, 7 electrode plate; 71 current collector; 72 active material layer; 73 electrical connection member; 8 separator.

### Detailed Description of Embodiments

Hereinafter, embodiments of a positive electrode material and a manufacturing method therefor, a secondary battery, a battery module, a battery pack, and an electrical device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60 to 120 and 80 to 110 are listed for a particular parameter, it should be understood that the ranges of 60 to 110 and 80 to 120 are also contemplated. Additionally, if minimum range values 1 and 2 are listed, and maximum range values 3, 4, and 5 are listed, the following ranges are all contemplated: 1 to 3, 1 to 4, 1 to 5, 2 to 3, 2 to 4, and 2 to 5. In the present application, unless stated otherwise, the numerical range "a to b" denotes an abbreviated representation of any combination of real numbers between a and b, where both a and b are real numbers. For example, the numerical range "0 to 5" means that all real numbers between "0 to 5" have been listed herein, and "0 to 5" is just an abbreviated representation of combinations of these numerical values. In addition, when a parameter is expressed as an integer of≥ 2, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

The terms "comprise" and "include" mentioned in the present application are open-ended or closed-ended, unless otherwise stated. For example, the terms "comprising" and "including" may mean that other components not listed may also be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

In an embodiment of the present application, a composite current collector is provided, including: an organic support layer having an air permeability greater than or equal to 50 s/100 mL; and an electrically conductive layer arranged on one surface of the organic support layer.

The applicant has found that an organic layer having an air permeability greater than or equal to 50 s/100 mL is used as a support layer of the composite current collector, and the support layer can be used as a separator, so that a separator provided between electrode plates can be omitted, the manufacturing process can be simplified, the ion channel can be shortened, and the charge and discharge characteristics can be improved. In addition, since a space for providing the separator is saved, more active material can be coated per unit volume, thereby increasing the energy density.

In addition, the composite current collector, the secondary battery, and the power consuming device of the present application will be described below by appropriately referring to the accompanying drawings.

### [Composite current collector]

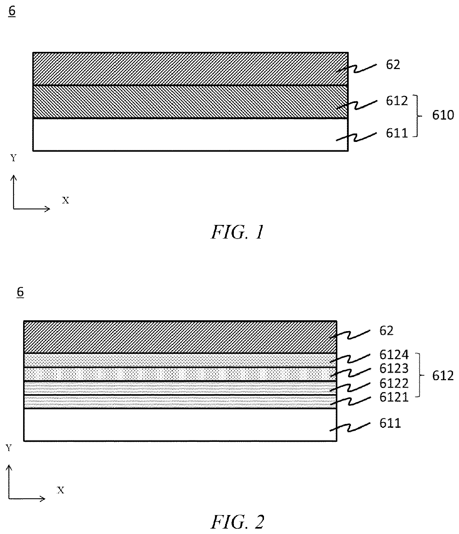

Fig. 1 is a schematic cross-sectional view of a composite current collector according to an embodiment of the present application. As shown in Fig. 1, the composite current collector 610 includes: an organic support layer 611 having an air permeability greater than or equal to 50 s/100 mL; and an electrically conductive layer 612 arranged on one surface of the organic support layer 611, with an active material layer 62 being provided on the electrically conductive layer 612.

In some embodiments, optionally, the organic support layer 611 has an air permeability of 50 s/100 mL to 2000 s/100 mL, and optionally, 100 s/100 mL to 500 s/100 mL. The air permeability of the organic support layer is controlled within the above-mentioned range, so that the ion permeability can be ensured, and an electrolyte solution can have a good infiltration performance, allowing lithium ions of the electrolyte solution to pass through smoothly. If the air permeability is too high, pores of the separator are equivalent to closed pores, and lithium ions of the electrolyte solution cannot pass through the separator, so that high ion permeability cannot be achieved. If the air permeability is too low, pores of the separator are equivalent to through pores, and large-particle ions of other materials may also pass through, so that the separator is ineffective. Thus, by setting the air permeability reasonably, the charge and discharge characteristics of the secondary battery can be further improved.

In some embodiments, optionally, the electrically conductive layer 612 has pores, and the electrically conductive layer 612 has a porosity of 10% to 95%, and optionally, 10% to 50%. Since the porosity of the electrically conductive layer 612 is controlled within the above-mentioned range, the required ion permeability can be met, further improving the charge and discharge characteristics of the secondary battery. By keeping the porosity in an appropriate range, insufficient ion permeability can be avoided, and a circumstance where ions are immersed into the electrically conductive layer while surplus ions fail to penetrate due to the lack of space in the organic support layer 611 can be avoided. In addition, an upper limit of a fiber pore permeability of the organic support layer 611 is positively correlated with an upper limit of the porosity of the electrically conductive layer, which can ensure ion permeability.

In some embodiments, in order to increase an infiltration rate of the electrolyte solution and to allow rapid permeation of ions, an average pore size of the electrically conductive layer 612 may be set to be from 100 nm to 1000 nm.

In some embodiments, optionally, the organic support layer 611 is a polyethylene film, a polypropylene film, a polyvinylidene chloride film or a multi-layer composite film thereof. The organic support layer made of the above-mentioned material can reliably form a support layer with a high ion permeability.

In some embodiments, optionally, the organic support layer 611 has a thickness of, for example, 1000 nm to 8000 nm. In this way, a sufficient supporting strength can be provided.

In some embodiments, optionally, when the air permeability is 50 s/100 mL to 2000 s/100 mL, the organic support layer may be made of one or more of polyamide (PA), polyimide (PI), polyester, polyolefin, polyyne, siloxane polymer, polyether, polyalcohol, polysulfone, polysaccharide polymer, amino acid polymer, polysulfur nitride, aromatic ring polymer, aromatic heterocyclic polymer, epoxy resin, phenolic resin, derivatives thereof, crosslinked products thereof, and copolymers thereof. Further, the organic support layer is made of, for example, one or more of polycaprolactam (commonly known as nylon 6), polyhexamethylene adipamide (commonly known as nylon 66), polyp-phenylene terephthamide (PPTA), poly(isophthaloyl metaphenylene diamine) (PMIA), polyethylene terephthalate (PET), polybutylene terephthalate (PBT), polyethylene naphthalate (PEN), polycarbonate (PC), polyethylene (PE), polypropylene (PP), polypropylene ethylene (PPE), polyvinyl alcohol (PVA), polystyrene (PS), polyvinyl chloride (PVC), polyvinylidene fluoride (PVDF), polytetrafluoroethylene (PTEE), polystyrene sulfonate (PSS), polyacetylene, polypyrrole (PPy), polyaniline (PAN), polythiophene (PT), polypyridine (PPY), silicone rubber, polyformaldehyde (POM), polyphenylene, polyphenyl ether (PPO), polyphenylene sulfide (PPS), polyethylene glycol (PEG), acrylonitrile-butadiene-styrene copolymer (ABS), cellulose, starch, protein, derivatives thereof, crosslinked products thereof, and copolymers thereof.

In some embodiments, optionally, the electrically conductive layer 612 has a thickness of 200 nm to 3000 nm, and optionally, 500 nm to 1500 nm. Since the thickness of the electrically conductive layer is within the above-mentioned range, it is conductive to improving the volumetric energy density of the secondary battery, and under an abnormal condition such as nail penetration of the secondary battery, burr generated by the electrically conductive layer is reduced greatly, short-circuit resistance of the secondary battery is increased, and short-circuit current and short-circuit heat generation are reduced, thereby improving the safety performance of the secondary battery; moreover, it is conducive to making the composite current collector have a good electrical conductivity and current collection performance, and less prone to breakage during processing and use of the composite current collector, so that the composite current collector has a good mechanical stability and a long service life.

In some embodiments, optionally, as shown in Fig. 2, the electrically conductive layer 612 includes a pore-making transition layer 6121, a thickening layer 6122, a functional layer 6123, and a protective layer 6124 that are stacked in sequence from the organic support layer 611. In this way, the ion channel can be formed on the electrically conductive layer 612 well and the thickness of the electrically conductive layer 612 can be adjusted easily. In addition, the protective layer 6124 can prevent the electrically conductive layer 612 from chemical corrosion, mechanical damage or other damages, to ensure that the composite current collector 610 has a high working stability and a long service life. In addition, the protective layer 6124 can also enhance the mechanical strength of the composite current collector 610.

In some embodiments, optionally, the pore-making transition layer 6121, the thickening layer 6122, and the functional layer 6123 each are made of one or more of aluminum, an aluminum alloy, copper, a copper alloy, nickel, a nickel alloy, titanium, a titanium alloy, iron, an iron alloy, silver and a silver alloy, and the protective layer 6124 includes one or more of metal, metal oxide, and conductive carbon, and preferably includes one or more of nickel, chromium, a nickel-based alloy, a copper-based alloy, aluminum oxide, cobalt oxide, chromium oxide, nickel oxide, graphite, superconducting carbon, acetylene black, carbon black, Ketjen black, a carbon dot, a carbon nanotube, graphene, and a carbon nanofiber. In this way, the protective layer 6124 can play a protective role against chemical corrosion and mechanical damage to the electrically conductive layer, and can also improve an interface between the composite current collector and the active material layer, increase a bonding force between the composite current collector and the positive electrode active material layer, and improve the performance of the secondary battery.

In some embodiments, optionally, the pore-making transition layer 6121 has a thickness of 2 nm to 100 nm, and optionally, 10 nm to 50 nm; the thickening layer 6122 has a thickness of 5 nm to 300 nm, and optionally, 20 nm to 100 nm; and the functional layer 6123 has a thickness of 500 nm to 5000 nm, and optionally, 500 nm to 2000 nm. In this way, the ion permeability, the electrical conductivity and the mechanical stability of the composite current collector 610 can be balanced.

In some embodiments, optionally, the protective layer 6124 has a thickness of 20 nm to 100 nm. In this way, oxidation of the electrically conductive layer can be avoided.

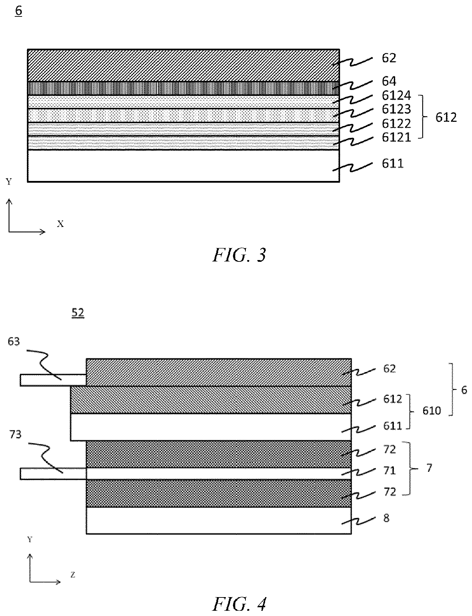

In some embodiments, optionally, as shown in Fig. 3, a primer layer 64 is further provided between the active material layer 62 and the electrically conductive layer 612, the primer layer 64 including a binder and a conductive agent. The primer layer 64 can improve an interface of the composite current collector 610 and overcome shortcomings such as poor electrical conductivity and current flow capacity of the composite current collector and the electrically conductive layer of the composite current collector being susceptible to damage, and can improve the electron transport efficiency, and reduce the resistance between the current collector and the electrode active material layer by effectively mending the surface of the current collector and constructing a conductive network between the current collector, the conductive primer layer and the active material, thereby effectively reducing the internal direct-current internal resistance in the secondary battery, improving the power performance of the secondary battery, and ensuring that a cell is less prone to large polarization, lithium precipitation and other phenomena during long-term cycling, that is, the long-term reliability of the secondary battery is effectively improved.

Apparently, the composite current collector in the present application can be used for either positive or negative electrode plates. When it is used for the positive electrode plate, correspondingly, the composite current collector and the active material layer are a positive electrode current collector and a positive electrode active material layer, respectively. When it is used for a negative electrode plate, correspondingly, the composite current collector and the active material layer are a negative electrode current collector and a negative electrode active material layer, respectively.

When the composite current collector 610 of the present application is a positive electrode current collector, the positive electrode plate includes a positive electrode composite current collector and a positive electrode active material layer arranged on one surface of the positive electrode current collector. The positive electrode active material layer includes a positive electrode active material.

In some embodiments, the positive electrode active material may be a positive electrode active material known in the art for batteries. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Examples of lithium transition metal oxides may include, but are not limited to, at least one of lithium cobalt oxide (e.g. LiCoO₂), lithium nickel oxide (e.g. LiNiO₂), lithium manganese oxide (e.g. LiMnO₂, and LiMn₂O₄), lithium nickel cobalt oxide, lithium manganese cobalt oxide, lithium nickel manganese oxide, lithium nickel cobalt manganese oxide (e.g. LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (e.g. LiNi_{0.85}Co_{0.15}Al_{0.05}O₂), modified compounds thereof, and the like. Examples of lithium-containing phosphates of olivine structure may include, but are not limited to, at least one of lithium iron phosphate (e.g. LiFePO₄ (also abbreviated as LFP)), lithium iron phosphate and carbon composites, lithium manganese phosphate (e.g. LiMnPO₄), lithium manganese phosphate and carbon composites, lithium iron manganese phosphate, and lithium iron manganese phosphate and carbon composites.

In some embodiments, the positive electrode active material layer also optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylate resin.

In some embodiments, the positive electrode active material layer also optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared as follows: dispersing the above-described components for preparing the positive electrode plate, such as a positive electrode active material, a conductive agent, a binder and any other components, in a solvent (e.g., N-methylpyrrolidone) to form a positive slurry; and coating the positive electrode composite current collector with the positive electrode slurry, followed by the procedures such as drying and cold pressing, so as to obtain the positive electrode plate.

When the composite current collector 610 of the present application is a negative electrode current collector, the negative electrode plate includes a negative electrode composite current collector and a negative electrode active material layer arranged on one surface of the negative electrode current collector. The negative electrode active material layer includes a negative electrode active material.

In some embodiments, the negative electrode active material may be a negative electrode active material known in the art for batteries. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode active material layer also optionally includes a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode active material layer also optionally includes a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode active material layer also optionally includes other auxiliary agents, e.g., a thickener (e.g. sodium carboxymethyl cellulose (CMC-Na)).

In some embodiments, the negative electrode plate may be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode composite current collector with the negative electrode slurry, followed by procedures such as drying and cold pressing, so as to obtain the negative electrode plate.

### [Method for manufacturing composite current collector]

In another embodiment of the present application, a method for manufacturing a composite current collector is provided, the method including the following steps (1) to (3):
step (1): forming an organic support layer having an air permeability greater than or equal to 50 s/100 mL;
step (2): forming a pore-making transition layer on one surface of the organic support layer by vapor deposition and by using a photomask with pores; and
step (3): forming an electrically conductive metal layer on the pore-making transition layer by electroplating.

By the foregoing method, pores can be formed in the electrically conductive metal layer by using a photomask, so that high ion permeability can be achieved, further improving the charge and discharge characteristics of the secondary battery. In addition, the pore-making transition layer serves as a substrate for an electroplated layer, so that an electroplated layer with pores can be formed easily, and the thickness of the electrically conductive metal layer can be adjusted easily by electroplating.

In some embodiments, the method further includes:
step (4): forming a protective layer on the electrically conductive metal layer.

In this way, the protective layer can prevent the electrically conductive layer from chemical corrosion, mechanical damage or other damages, to ensure that the composite current collector has a high working stability and a long service life. In addition, the protective layer can also enhance the mechanical strength of the composite current collector.

In some embodiments, in step (2), a pore size and a porosity of the pore-making transition layer are adjusted with a pore size and a pore density of the photomask. In this way, ion permeability and the electrical conductivity of the composite current collector can be balanced.

In some embodiments, in step (2), an electrically conductive material is evaporated in a vacuum plating chamber at a temperature of 13 00°C to 2000°C, and is then cooled and deposited on the organic support layer to form the pore-making transition layer. In this way, a bonding force between the electrically conductive metal layer and the organic support layer can be increased, and the support layer is effective in supporting the electrically conductive metal layer.

In some embodiments, in step (4), the protective layer is formed on the electrically conductive metal layer by at least one of a vapor deposition method, an in-situ formation method or a coating method. In this way, a relatively high bonding force is provided between the electrically conductive layer and the protective layer, so that the protective layer better protects the composite current collector, and a higher operating performance of the composite current collector is ensured.

In some embodiments, a thickening layer and a functional layer may be formed separately by electroplating twice in step (3). In this way, electrically conductive metal layers of different thicknesses can be easily formed.

### [Electrode assembly]

In an embodiment of the present application, an electrode assembly is provided. The electrode assembly 52 includes a positive electrode plate (first electrode plate) 6, a negative electrode plate (second electrode plate) 7, and a separator 8 which prevents short-circuiting of positive and negative electrodes when the electrode assembly is made by a winding process and which also allows ions to pass through. In this specification, the positive electrode plate is referred to as the first electrode plate and the negative electrode plate is referred to as the second electrode plate, and vice versa.

In some embodiments, the positive electrode plate among the positive and negative electrode plates is the electrode plate 6 having the above-mentioned structure of the present application. The negative electrode plate among the positive and negative electrode plates is the electrode plate 7 having a conventional structure, and vice versa.

As shown in Fig. 4, the positive electrode plate 6 includes the composite current collector 610, the active material layer 62 arranged on one surface of the composite current collector 610, and an electrical connection member 63 electrically connected to the electrically conductive layer 612 of the composite current collector 610.

The negative electrode plate 7 includes a negative electrode current collector 71, negative electrode active material layers 72 formed on two surfaces of the negative electrode current collector 71, and an electrical connection member 73 electrically connected to the negative electrode current collector 71. The organic support layer 611 of the positive electrode plate 6 is arranged in close contact with the active material layer 72 of the negative electrode plate 7 as viewed in a length direction X of the electrode plate.

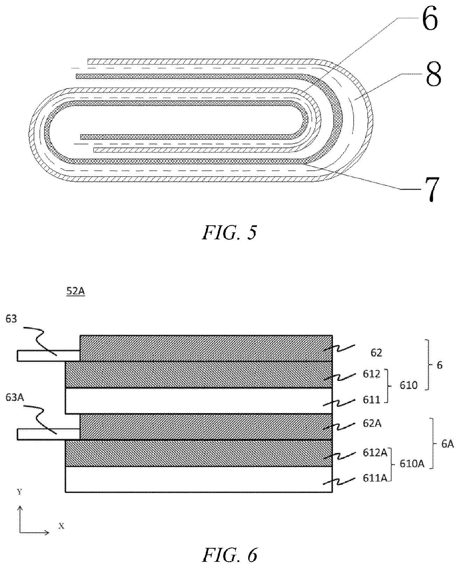

Fig. 5 is a top view of the electrode assembly 52 shown in Fig. 4 after being wound up. After the electrode assembly is wound up, the positive electrode active material layer of the positive electrode plate 6 is arranged in close contact with the separator 8, and the organic support layer of the positive electrode plate 6 is arranged in close contact with one of the negative electrode active material layers 72 of the negative electrode plate 7.

In this way, it is not necessary to provide a separator between the positive electrode plate 6 and the negative electrode plate 7 in this embodiment, and the support layer 611 functions as a separator between the positive electrode plate 6 and the negative electrode plate 7. The negative electrode plate 7 is separated from the positive electrode plate 6 by the separator 8.

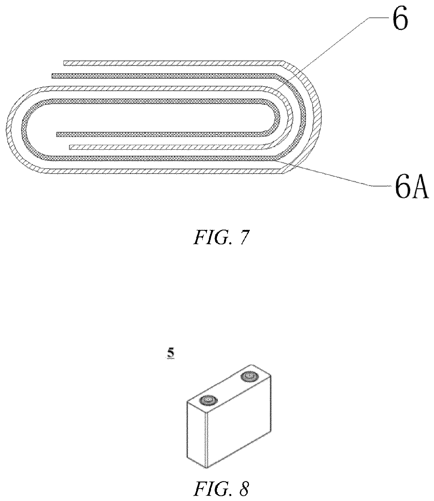

Fig. 6 is a cross-sectional view of an electrode assembly 52A according to an embodiment of the present application. Fig. 7 is a top view of the electrode assembly 52A shown in Fig. 6 after being wound up. The electrode assembly 52A differs from the electrode assembly 52 described above in that the positive electrode plate and the negative electrode plate are respectively the electrode plates having the above structure of the present application. That is, the negative electrode plate 6A includes a current collector 610A, an active material layer 62A arranged on one surface of the current collector 610A, and an electrical connection member 63A electrically connected to the current collector 610A.

As shown in Figs. 6 and 7, in this embodiment, the organic support layer 611 of the positive electrode plate 6 is arranged in close contact with the negative electrode active material layer 62A of the negative electrode plate 6A, and an organic support layer 611A of the negative electrode plate 6A is arranged in close contact with the positive electrode active material layer 62 of the positive electrode plate 6. In this way, in this embodiment, it is not necessary to provide a separator between the positive and negative electrode plates 6, 6A, and the organic support layers 611, 611A function as separators between the positive and negative electrode plates 6, 6A.

In addition, the foregoing method is illustrated in the form of wound electrode plates as an example, and it is also applicable to stacked electrode plates.

### [Method for manufacturing electrode assembly]

In another embodiment of the present application, a method for manufacturing an electrode assembly is provided, the method including:
preparing a first electrode plate, the first electrode plate including a first composite current collector which is a composite current collector in the first aspect of the present application;and
preparing a second electrode plate, the second electrode plate including a second current collector and active material layers provided on two surfaces of the second current collector;
preparing a separator; and
stacking the first electrode plate, the second electrode plate and the separator in sequence in such a way that the organic support layer of the first composite current collector of the first electrode plate is in contact with one of the active material layers of the second electrode plate and the other active material layer of the second electrode plate is in contact with the separator, to obtain a stacked structure, and winding up the stacked structure.

In this way, the use of a separator layer for manufacturing the electrode assembly can be omitted.

In another embodiment of the present application, a method for manufacturing an electrode assembly is provided, the method including:
preparing a first electrode plate and a second electrode plate, the first electrode plate including a first composite current collector and the second electrode plate including a second composite current collector, the first composite current collector and the second composite current collector each being a composite current collector in the first aspect of the present application;and
winding up the first electrode plate and the second electrode plate in such a way that the organic support layer of the first composite current collector of the first electrode plate is in contact with the active material layer of the second electrode plate and the organic support layer of the second composite current collector of the second electrode plate is in contact with the active material layer of the first electrode plate.

In this way, a secondary battery can be manufactured without a separator.

### [Secondary battery]

In one embodiment of the present application, a secondary battery is provided. The secondary battery includes the composite current collector as described above in the present application or the electrode assembly as described above in the present application.

The secondary battery further includes an electrolyte. During a charge/discharge process of the battery, active ions are intercalated and de-intercalated back and forth between a positive electrode plate and a negative electrode plate. The electrolyte serves to conduct ions between the positive electrode plate and the negative electrode plate.

### (Electrolyte)

The electrolyte serves to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, the electrolyte is an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### (Separator)

In some embodiments, in order to prevent short-circuiting of positive and negative electrodes and to allow ions to pass through, the secondary battery may further include a separator provided between the positive electrode plate and the negative electrode plate. However, since a support layer in the electrode plate of the present application can also function as a separator, in the secondary battery of the present application, when the positive electrode plate and the negative electrode plate are separated by the support layer, no additional separator may be provided. The type of the separator is not particularly limited in the present application, and any well known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be a single-layer film and also a multi-layer composite film, and is not limited particularly. When the separator is a multi-layer composite film, the materials in the respective layers may be same or different, which is not limited particularly.

In some embodiments, the positive electrode plate and the negative electrode plate, and the separator provided as required can be made into the electrode assembly by a winding process or a lamination process.

In some embodiments, the secondary battery may include an outer package. The outer package can be used to encapsulate the above-mentioned electrode assembly and electrolyte.

In some embodiments, the outer package of the secondary battery may be a hard shell, such as a hard plastic shell, an aluminum shell, or a steel shell. The outer package of the secondary battery may also be a soft bag, such as a pouch-type soft bag. The material of the soft bag may be plastics, and the examples of plastics may include polypropylene, polybutylene terephthalate, and polybutylene succinate, etc.

The shape of the secondary battery is not particularly limited in the present application, and may be cylindrical, square or of any other shape. For example, Fig. 8 shows a secondary battery 5 of a square structure as an example.

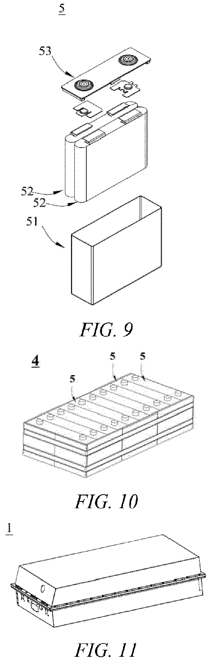

In some embodiments, referring to Fig. 9, an outer package may include a housing 51 and a cover plate 53. Herein, the housing 51 may include a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate and the negative electrode plate, and the separator provided as required may be subjected to a winding process or a laminating process to form the electrode assembly 52. The electrode assembly 52 is packaged in the accommodating cavity. The electrolyte is infiltrated into the electrode assembly 52. The number of the electrode assemblies 52 contained in the secondary battery 5 may be one or more, and can be selected by those skilled in the art according to actual requirements.

In some embodiments, the secondary battery may be assembled into a battery module, and the number of the secondary batteries contained in the battery module may be one or more, and the specific number can be selected by those skilled in the art according to the application and capacity of the battery module.

### [Battery module]

Fig. 10 shows a battery module 4 as an example. Referring to Fig. 10, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may further include a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

### [Battery pack]

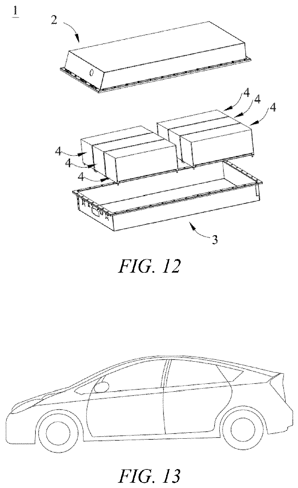

Figs. 11 and 12 show a battery pack 1 as an example. Referring to Figs. 11 and 12, the battery pack 1 may include a battery case and a plurality of battery modules 4 provided in the battery case. The battery case includes an upper case body 2 and a lower case body 3. The upper case body 2 can cover the lower case body 3 to form a closed space for accommodating the battery modules 4. The plurality of battery modules 4 may be arranged in the battery case in any manner.

### [Power consuming device]

In addition, the present application further provides a power consuming device including at least one of the secondary battery, the battery module, or the battery pack provided by the present application. The secondary battery, the battery module or the battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As for the power consuming device, the secondary battery, the battery module or the battery pack can be selected according to the usage requirements thereof.

Fig. 13 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

As another example, the electrical apparatus may be a mobile phone, a tablet computer, a laptop computer, etc. The electrical apparatus is generally required to be thin and light, and may use the secondary battery as a power supply.

### Examples

Current collectors used in the electrode plates in examples and comparative examples are prepared as follows:

### 1. Preparation of composite current collector:

A support layer having a thickness of 5000 nm and an air permeability (greater than or equal to 50 s/100 mL) is selected, and an electrically conductive layer having a thickness is formed on a surface of the support layer by using a photomask with pores and by vacuum evaporation, electroplating and the like. The air permeability may be tested by referring to GB/T 36363-2018.

The forming conditions of a vacuum evaporation method are as follows: the support layer subjected to a surface cleaning treatment is placed into a vacuum plating chamber, and a high-purity metal wire in the metal evaporation chamber is melted and evaporated at a high temperature of 1300°C to 2000°C. The evaporated metal passes through a cooling system in the vacuum plating chamber, and finally is deposited on the surface of the support layer to form an electrically conductive layer.

The forming conditions of an electroplating method are as follows:
(1) Current density: a current per unit electroplating area. In general, the higher the current density, the thicker the film, but when the current density is too high, the electroplated layer will be burnt and rough.
(2) Electroplating position: the position of an electroplated part in an electroplating solution or the position corresponding to an anode will affect the thickness profile of the film.
(3) Stirring condition: the better the stirring effect, the better the electroplating efficiency. There are air, water flow, cathode and other stirring methods.
(4) Current waveform: in general, the better the filtering degree, the more uniform the electroplated structure.
(5) Temperature of electroplating solution: gold electroplating temperature is about 50-60°C, nickel electroplating temperature is about 50-60°C, tin-lead electroplating temperature is about 17-23°C, and palladium-nickel electroplating temperature is about 45-55°C.
(6) pH of electroplating solution: pH of gold electroplating solution is about 4.0 to 4.8, pH of nickel electroplating solution is about 3.8 to 4.4, and pH of palladium-nickel electroplating solution is about 8.0 to 8.5.
(7) Specific weight of electroplating solution: basically, low specific weight leads to poor conductivity of the solution, resulting in a poor plating efficiency.

### 2. Preparation of electrode plate:

### (1) Positive electrode plate without conductive primer layer:

A 92 wt% positive electrode active material (if no specific material is specified, NCM333 is used by default), a 5 wt% conductive agent Super-P ("SP" for short), and a 3 wt% PVDF are stirred evenly with a solvent NMP, to prepare a positive electrode active material layer slurry (the composition of the active material layer slurry in some embodiments may vary, and in this case, the specified composition in this embodiment shall prevail). Extrusion coating is performed to apply, through partition coating, the positive electrode active material layer slurry on one surface of the composite current collector prepared by the foregoing method;and drying is performed at 85°C to obtain a positive electrode active material layer. Then, the current collector with the respective coating layer is cold-pressed, cut, and then dried under vacuum at 85°C for 4 hours, and a tab is welded to obtain a positive electrode plate.

### (2) Conventional positive electrode plate:

The current collector is an Al foil having a thickness of 12 µm. Similar to the preparation method of the foregoing positive electrode plate, the positive electrode active material layer slurry is directly applied on the surface of the current collector of the Al foil, and then the conventional positive electrode plate is obtained through post-processing.

### (3) Positive electrode plate with conductive primer layer:

A conductive material (such as conductive carbon black) and a binder (such as PVDF or polyacrylic acid) at a specified ratio (4 : 1), and an optional active material are dissolved in an appropriate solvent (such as NMP or water), and stirred evenly to form a primer slurry.

The primer slurry is evenly applied on a surface of the electrically conductive layer of the composite current collector at a coating speed of 20 m/min, and a primer layer is dried at an oven temperature is 70°C to 100°C for 5 min.

After the primer layer is fully dried, a 92 wt% positive electrode active material, a 5 wt% conductive agent Super-P ("SP" for short), and 3 wt% PVDF are stirred evenly with a solvent NMP, to prepare a positive electrode active material layer slurry. Extrusion coating is performed to apply the positive electrode active material layer slurry on the surface of the primer layer through partition coating; and drying is performed at 85°C to obtain a positive electrode active material layer. Then, post-processing is performed to obtain a positive electrode plate with a conductive primer layer.

### (4) Negative electrode plate without conductive primer layer:

A negative electrode active material artificial graphite, a conductive agent Super-P, a thickener CMC, and a binder SBR are added to a deionized water solvent at a mass ratio of 96.5 : 1.0 : 1.0 : 1.5, and mixed evenly to prepare a negative electrode active material layer slurry. Extrusion coating is performed to apply the negative electrode active material layer slurry on one surface of the composite current collector prepared by the foregoing methods through partition coating; and drying is performed at 85°C to obtain a negative electrode active material layer.

Then, the current collector with the respective coating layer is cold-pressed, cut, and then dried under vacuum at 110°C for 4 hours, and a tab is welded to obtain a negative electrode plate.

### (5) Conventional negative electrode plate:

The current collector is a Cu foil having a thickness of 8 µm. Similar to the preparation method of the above negative electrode plate, the negative electrode active material layer slurry is directly applied on the surface of the current collector of the Cu foil, and then the conventional negative electrode plate is obtained through post-processing.

### (6) Negative electrode plate with conductive primer layer:

A conductive material (such as conductive carbon black) and a binder (such as PVDF or polyacrylic acid) at a specified ratio (4 : 1), and an optional active material are dissolved in an appropriate solvent (such as NMP or water), and stirred evenly to form a primer slurry.

The primer slurry is evenly applied on a surface of the electrically conductive layer of the composite current collector at a coating speed of 20 m/min, and a primer layer is dried at an oven temperature is 70°C to 100°C for 5 min.

After the primer layer is completely dried, a negative electrode active material artificial graphite, a conductive agent Super-P, a thickener CMC, and a binder SBR are added to a deionized water solvent at a mass ratio of 96.5 : 1.0 : 1.0 : 1.5, and mixed evenly to prepare a negative electrode active material layer slurry. Extrusion coating is performed to apply the negative electrode active material layer slurry on the primer layer of the current collector by partition coating; and drying is performed at 85°C to obtain a negative electrode active material layer. Then, post-processing is performed to obtain a negative electrode plate having a conductive primer layer in an extension area.

### 3. Preparation of battery:

Through a conventional battery preparation process, a positive electrode plate (having a compacted density of 3.4 g/cm³), a negative electrode plate (having a compacted density of 1.6 g/cm³) and a PP/PE/PP separator (which may be two separators, one separator or no separator as required) are wound up together into a bare cell, and the bare cell is then placed in a battery housing; an electrolyte solution (having a volume ratio of EC to EMC of 3 : 7, and a concentration of LiPF6 of 1 mol/L) is filled; then after processes such as sealing and formation, a lithium-ion secondary battery (hereinafter referred to as the battery for short) is finally obtained.

### 4. Battery testing method:

### 1) Rate performance test:

A battery is discharged to 3.0V at 25 ± 5 °Cwith a constant current of 1.0 CmA, and is fully charged and subjected to standing for 2 hours, followed by visual inspection on the battery, measurement of size, open-circuit voltage and internal resistance of the battery, and after the test, cycling at 1.0 CmA is performed for three times (discharging; fully charging and discharging; fully charging and discharging; 50% charging or fully charging), and the discharge capacity and the midpoint voltage in the 3rd week are then tested.

### 2) Cycling performance test

After the battery is fully charged at an ambient temperature of 25 ± 5°C, it is subj ected to standing for 10 min, discharged to 3.0V at a current of 10.0 CmA or nominal rate, and subjected to standing for 10 min, and cycling is performed by repeating the above steps until the battery discharge capacity is not greater than 80% of the discharge capacity in the 3rd week twice.

### 3) DCR (direct-current internal resistance) testing method:

According to the physical formula R = V/I, a large constant DC current (currently, a large current of 40A-80A is generally used) is forcedly introduced by a test apparatus to the battery for a short period of time (generally 2-3 seconds), the voltage across the battery is then measured, and the current internal resistance of the battery is calculated according to the formula.

### 5. Test results and discussion:

### 5.1 Effect of parameters of organic support layer on performance of secondary battery

In accordance with the parameters in Tables 1 and 2 below, composite current collectors 1 to 9 and Examples 1 to 7 and Comparative Examples 1 and 2 of secondary batteries are prepared substantially based on "1. Preparation of composite current collector", "2. Preparation of electrode plate" and "3. Preparation of battery" described above, and are tested.

**[Table 1]**

| | Organic support layer | | Electrically conductive layer |
|---|---|---|---|
| | Material | Air permeability (s/100 mL) | |
| Composite current collector 1 | Polyethylene film | 50 | Thickness: 1000 nm; Porosity: 30% |
| Composite current collector 2 | Polyethylene film | 100 | Thickness: 1000 nm; Porosity: 30% |
| Composite current collector 3 | Polyethylene film | 200 | Thickness: 1000 nm; Porosity: 30% |
| Composite current collector 4 | Polyethylene film | 500 | Thickness: 1000 nm; Porosity: 30% |
| Composite current collector 5 | Polyethylene film | 2000 | Thickness: 1000 nm; Porosity: 30% |
| Composite current collector 6 | Polypropylene film | 200 | Thickness: 1000 nm; Porosity: 30% |
| Composite current collector 7 | Polyvinylidene chloride film | 200 | Thickness: 1000 nm; Porosity: 30% |
| Composite current collector 8 | Polyethylene film | 30 | Thickness: 1000 nm; Porosity: 30% |
| Composite current collector 9 | Polyethylene film | 3000 | Thickness: 1000 nm; Porosity: 30% |

**[Table 2]**

| Secondary battery | Positive electrode plate | Negative electrode plate | Rate performance | Cycling performance |
|---|---|---|---|---|
| Example 1 | Composite current collector 1, with one side coated | Conventional electrode plate, with both sides coated | 1C (95%) | 25°C |
| | | | 2C (80%) | (2500 Cycles) |
| Example 2 | Composite current collector 2, with one side coated | Conventional electrode plate, with both sides coated | 1C (96%) | 25°C |
| | | | 2C (82%) | (2700 Cycles) |
| Example 3 | Composite current collector 3, with one side coated | Conventional electrode plate, with both sides coated | 1C (96%) | 25°C |
| | | | 2C (86%) | (2900 Cycles) |
| Example 4 | Composite current collector 4, with one side coated | Conventional electrode plate, with both sides coated | 1C (91%) | 25°C |
| | | | 2C (85%) | (2800 Cycles) |
| Example 5 | Composite current collector 5, with one side coated | Conventional electrode plate, with both sides coated | 1C (93%) | 25°C |
| | | | 2C (84%) | (3100 Cycles) |
| Example 6 | Composite current collector 6, with one side coated | Conventional electrode plate, with both sides coated | 1C (96%) | 25°C |
| | | | 2C (87%) | (3300 Cycles) |
| Example 7 | Composite current collector 7, with one side coated | Conventional electrode plate, with both sides coated | 1C (98%) | 25°C |
| | | | 2C (89%) | (3500 Cycles) |
| Comparative Example 1 | Composite current collector 8, with one side coated | Conventional electrode plate, with both sides coated | 1C (88%) | 25°C |
| | | | 2C (75%) | (2000 Cycles) |
| Comparative Example 2 | Composite current collector 9, with one side coated | Conventional electrode plate, with both sides coated | 1C (85%) | 25°C |
| | | | 2C (76%) | (2100 Cycles) |

From the results in Tables 1 and 2, by comparing Examples 1 to 7 with Comparative Examples 1 to 2, it can be seen that by setting the air permeability of the organic support layer in the range of 50 to 2000 s/100 mL, excellent rate performance and cycling performance can be obtained as compared with Comparative Examples 1 and 2.

### 5.2 Effect of parameters of electrically conductive layer on performance of secondary battery

In accordance with parameters in Tables 3 and 4 below, composite current collectors 10 to 20 and Examples 8 to 18 and Comparative Examples 3 of secondary batteries are prepared substantially based on "1. Preparation of composite current collector", "2. Preparation of electrode plate" and "3. Preparation of battery" described above, and are tested.

**[Table 3]**

| | Organic support layer | | Electrically conductive layer | |
|---|---|---|---|---|
| | Material | Air permeability (s/100 mL) | Thickness (nm) | Porosity |
| Composite current collector 10 | Polyethylene film | 200 | 200 | 30% |
| Composite current collector 11 | Polyethylene film | 200 | 500 | 30% |
| Composite current collector 12 | Polyethylene film | 200 | 1500 | 30% |
| Composite current collector 13 | Polyethylene film | 200 | 3000 | 30% |
| Composite current collector 14 | Polyethylene film | 200 | 500 | 10% |
| Composite current collector 15 | Polyethylene film | 200 | 500 | 50% |
| Composite current collector 16 | Polyethylene film | 200 | 500 | 95% |
| Composite current collector 17 | Polyethylene film | 200 | 100 | 30% |
| Composite current collector 18 | Polyethylene film | 200 | 5000 | 30% |
| Composite current collector 19 | Polyethylene film | 200 | 500 | 5% |
| Composite current collector 20 | Polyethylene film | 200 | 500 | 98% |

**[Table 4]**

| Secondary battery | Positive electrode plate | Negative electrode plate | Rate performance | Cycling performance | Internal resistance |
|---|---|---|---|---|---|
| Example 8 | Composite current collector 10, with one side coated | Conventional electrode plate, with both sides coated | 1C (96%) | 25°C | |
| | | | 2C (82%) | (2700 Cycles) | 0.95 mΩ |
| Example 9 | Composite current collector 11, with one side coated | Conventional electrode plate, with both sides coated | 1C (96%) | 25°C | |
| | | | 2C (85%) | (2800 Cycles) | 1.1 mΩ |
| Example 10 | Composite current collector 12, with one side coated | Conventional electrode plate, with both sides coated | 1C (97%) | 25°C | |
| | | | 2C (85%) | (3000 Cycles) | 1.2 mΩ |
| Example 11 | Composite current collector 13, with one side coated | Conventional electrode plate, with both sides coated | 1C (98%) | 25°C | |
| | | | 2C (89%) | (3100 Cycles) | 1.25 mΩ |
| Example 12 | Composite current collector 14, with one side coated | Conventional electrode plate, with both sides coated | 1C (97%) | 25°C | |
| | | | 2C (86%) | (2700 Cycles) | 0.95 mΩ |
| Example 13 | Composite current collector 15, with one side coated | Conventional electrode plate, with both sides coated | 1C (98%) | 25°C | |
| | | | 2C (90%) | (2900 Cycles) | 1.1 mΩ |
| Example 14 | Composite current collector 16, with one side coated | Conventional electrode plate, with both sides coated | 1C (95%) | 25°C | |
| | | | 2C (95%) | (3100 Cycles) | 1.2 mΩ |
| Example 15 | Composite current collector 17, with one side coated | Conventional electrode plate, with both sides coated | 1C (96%) | 25°C | |
| | | | 2C (80%) | (3000 Cycles) | 1.12 mΩ |
| Example 16 | Composite current collector 18, with one side coated | Conventional electrode plate, with both sides coated | 1C (98%) | 25°C | |
| | | | 2C (90%) | (2000 Cycles) | 1.6 mΩ |
| Example 17 | Composite current collector 19, with one side coated | Conventional electrode plate, with both sides coated | 1C (96%) | 25°C | |
| | | | 2C (75%) | (3000 Cycles) | 1.18 mΩ |
| Example 18 | Composite current collector 20, with one side coated | Conventional electrode plate, with both sides coated | 1C (96%) | 25°C | |
| | | | 2C (85%) | (2900 Cycles) | 1.15 mΩ |
| Comparative Example 3 | Conventional electrode plate, with both sides coated | Conventional electrode plate, with both sides coated | 1C (88%) | 25°C | |
| | | | 2C (70%) | (2000 Cycles) | 1.6 mΩ |

As can be seen from the results in Tables 3 and 4, a comparison of Examples 8 to 11 with Examples 15 to 16 shows that by setting the thickness of the electrically conductive layer in the range of 200 to 3000 nm, the internal resistance of the secondary battery can be reduced while excellent rate performance and cycling performance can be maintained.

As can be seen from the results in Tables 3 and 4, a comparison of Examples 8 and 12 to 14 with Examples 17 to 18 shows that by setting the porosity of the electrically conductive layer in the range of 10% to 95%, the low internal resistance and excellent rate performance and cycling performance of the secondary battery can be maintained.

As can be seen from the results in Tables 3 and 4, a comparison of Examples 8 to 18 with Comparative Example 3 shows that the secondary battery with the composite current collector of the present application has a low internal resistance and excellent rate performance and cycling performance.

### 5.3 Effect of structure of composite current collector on volumetric energy density of secondary battery

In accordance with parameters in Table 5 below, Example 3, 19, and Comparative Example 3 of secondary batteries are prepared substantially based on "1, Preparation of composite current collector", "2, Preparation of electrode plate", and "3, Preparation of battery" described above, and are subjected to volumetric energy density tests.

**[Table 5]**

| Secondary battery | Positive electrode plate | Negative electrode plate | Volumetric energy density |
|---|---|---|---|
| Example 10 | Composite current collector 12, with one side coated | Conventional electrode plate, with both sides coated | 550 Wh/L |
| Example 19 | Composite current collector 12, with one side coated | Composite current collector 12, with one side coated | 670 Wh/L |
| Comparative Example 3 | Conventional electrode plate, with both sides coated | Conventional electrode plate, with both sides coated | 490 Wh/L |

As can be seen from the results in Table 5, a comparison of Examples 10 and 19 with Comparative Example 3 shows that the secondary battery with the composite current collector of the present application has a higher volumetric energy density. Moreover, it can be seen from a comparison of Examples 10 and 19 that the secondary battery of which positive and negative electrode plates are both provided with composite current collectors has a higher volumetric energy density.

### 5.4 Effect of primer layer on performance of secondary battery

In accordance with parameters in Table 6 below, Example 3, 19, and Comparative Example 3 of secondary batteries are prepared substantially based on "1, Preparation of composite current collector", "2, Preparation of electrode plate", and "3, Preparation of battery" described above, and are subjected to volumetric energy density tests.

**[Table 6]**

| Secondary battery | Positive electrode plate | Negative electrode plate | Internal resistance |
|---|---|---|---|
| Example 10 | Composite current collector 12, with one side coated | Conventional electrode plate, with both sides coated | 1.1 mΩ |
| Example 20 | Composite current collector 12, having primer layer, with one side coated | Conventional electrode plate, with both sides coated | 0.95 mΩ |
| Example 21 | Composite current collector 12, having primer layer, with one side coated | Composite current collector 12, having primer layer, with one side coated | 1.05 mΩ |

As can be seen from the results in Table 6, a comparison of Example 10 with Examples 20 and 21 shows that secondary batteries having primer layers in Examples 20 and 21 have a lower internal resistance.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A composite current collector, comprising:
an organic support layer having an air permeability greater than or equal to 50 s/100mL; and
an electrically conductive layer arranged on one surface of the organic support layer.

2. The composite current collector according to claim 1, wherein
the organic support layer has an air permeability of 50 s/100 mL to 2000 s/100 mL, and optionally, 100 s/100 mL to 500 s/100 mL.

3. The composite current collector according to claim 1 or 2, wherein
the electrically conductive layer has pores, and
the electrically conductive layer has a porosity of 10% to 95%, and optionally, 10% to 50%.

4. The composite current collector according to any one of claims 1 to 3, wherein
the organic support layer is a polyethylene film, a polypropylene film, a polyvinylidene chloride film or a multi-layer composite film thereof.

5. The composite current collector according to any one of claims 1 to 4, wherein
the electrically conductive layer has a thickness of 200 nm to 3000 nm, and optionally, 500 nm to 1500 nm.

6. The composite current collector according to any one of claims 1 to 5, wherein
the electrically conductive layer comprises a pore-making transition layer, a thickening layer, a functional layer, and a protective layer that are stacked in sequence from the organic support layer.

7. The composite current collector according to claim 6, wherein
the pore-making transition layer, the thickening layer, and the functional layer each are made of one or more of aluminum, an aluminum alloy, copper, a copper alloy, nickel, a nickel alloy, titanium, a titanium alloy, iron, an iron alloy, silver and a silver alloy, and
the protective layer comprises one or more of metal, metal oxide, and conductive carbon, and preferably comprises one or more of nickel, chromium, a nickel-based alloy, a copper-based alloy, aluminum oxide, cobalt oxide, chromium oxide, nickel oxide, graphite, superconducting carbon, acetylene black, carbon black, Ketjen black, a carbon dot, a carbon nanotube, graphene, and a carbon nanofiber.

8. The composite current collector according to claim 6, wherein
the pore-making transition layer has a thickness of 2 nm to 100 nm, and optionally, 10 nm to 50 nm,
the thickening layer has a thickness of 5 nm to 300 nm, and optionally, 20 nm to 100 nm, and
the functional layer has a thickness of 500 nm to 5000 nm, and optionally, 500 nm to 2000 nm.

9. The composite current collector according to any one of claims 1 to 8, wherein
a primer layer is further provided between the active material layer and the electrically conductive layer, the primer layer comprising a binder and a conductive agent.

10. An electrode assembly, comprising:
a first electrode plate and a second electrode plate, wherein
one of the first electrode plate and the second electrode plate comprises a composite current collector according to any one of claims 1 to 9 and an active material layer arranged on the electrically conductive layer of the composite current collector, and
the organic support layer of the one of the first electrode plate and the second electrode plate is arranged in close contact with an active material layer of the other one of the first electrode plate and the second electrode plate.

11. An electrode assembly, comprising:
a first electrode plate and a second electrode plate, wherein
the first electrode plate and the second electrode plate each comprise a composite current collector according to any one of claims 1 to 9 and an active material layer arranged on the electrically conductive layer of the composite current collector,
the organic support layer of the first electrode plate is arranged in close contact with the active material layer of the second electrode plate, and
the organic support layer of the second electrode plate is arranged in close contact with the active material layer of the first electrode plate.

12. A method for manufacturing a composite current collector, the method comprising:
step (1): forming an organic support layer having an air permeability greater than or equal to 50 s/100 mL;
step (2): forming a pore-making transition layer on one surface of the organic support layer by vapor deposition and by using a photomask with pores; and
step (3): forming an electrically conductive metal layer on the pore-making transition layer by electroplating.

13. The method for manufacturing a composite current collector according to claim 12, further comprising:
step (4): forming a protective layer on the electrically conductive metal layer.

14. The method for manufacturing a composite current collector according to claim 12, wherein
in step (2), a pore size and a porosity of the pore-making transition layer are adjusted with a pore size and a pore density of the photomask.

15. The method for manufacturing a composite current collector according to claim 12, wherein
in step (2), an electrically conductive material is evaporated in a vacuum plating chamber at a temperature of 1300°C to 2000°C, and is then cooled and deposited on the organic support layer to form the pore-making transition layer.

16. The method for manufacturing a composite current collector according to claim 13, wherein
in step (4), the protective layer is formed on the electrically conductive metal layer by at least one of a vapor deposition method, an in-situ formation method or a coating method.

17. A method for manufacturing an electrode assembly, the method comprising:
preparing a first electrode plate, the first electrode plate comprising a first composite current collector which is a composite current collector of any one of claims 1 to 9, an active material layer being provided on the electrically conductive layer of the composite current collector;
preparing a second electrode plate, the second electrode plate comprising a second current collector and active material layers provided on two surfaces of the second current collector;
preparing a separator; and
stacking the first electrode plate, the second electrode plate and the separator in sequence in such a way that the organic support layer of the first composite current collector of the first electrode plate is in contact with one of the active material layers of the second electrode plate and the other active material layer of the second electrode plate is in contact with the separator, to obtain a stacked structure, and winding up the stacked structure.

18. A method for manufacturing an electrode assembly, the method comprising:
preparing a first electrode plate and a second electrode plate, the first electrode plate comprising a first composite current collector and the second electrode plate comprising a second composite current collector, the first composite current collector and the second composite current collector each being a composite current collector of any one of claims 1 to 9, an active material layer being provided on the electrically conductive layer of the composite current collector; and
winding up the first electrode plate and the second electrode plate in such a way that the organic support layer of the first composite current collector of the first electrode plate is in contact with the active material layer of the second electrode plate and the organic support layer of the second composite current collector of the second electrode plate is in contact with the active material layer of the first electrode plate.

19. A secondary battery, comprising
at least one of an electrode assembly of claim 10 or 11 and an electrode assembly prepared by the manufacturing method of claim 17 or 18.

20. A power consuming device, comprising
a secondary battery of claim 19.
